# EUROPEAN PATENT APPLICATION

(11) **EP 3 700 145 A1**
(43) Date of publication of application: **26.08.2020**
(21) Application number: 19157924.2
(22) Date of filing: 19.02.2019
(51) Int. Cl.: H04L 12/729, H04W 40/12, H04W 48/20

(54) **A CONTROLLER FOR ASSOCIATION OF A USER DEVICE WITH A RADIO NODE**

(71) Applicant: Nokia Solutions and Networks Oy, 02610 Espoo (FI)
(72) Inventor: Gacanin, Haris, 2018 Antwerpen (BE)
(74) Representative: IP HILLS NV

(57) **Abstract**

A controller (CL) for association of a user device (150) with a radio node (102) in a wireless network (100) performs:
- learning (201) one or more performance metric of neighbour radio nodes (101, 102, 103) or fronthaul links (L1, L2, L3) between the user device (150) and neighbour radio nodes (101, 102, 103);
- determining (202) one or more cumulative performance metric for respective multi-hop paths from the neighbour radio nodes (101, 102, 103) to a destination (119) in the wireless network (100);
- selecting (204) a best path (102-L9-109-L26-115-L39) according to a performance criterion combining one or more performance metric and one or more cumulative performance metric; and
- selecting (205) the neighbour radio node (102) of the best path for association of the user device (150).

## Description

### Technical Field

Various example embodiments relate to controlling access of a user device to a dense wireless communication network through association of the user device with a radio node of the wireless network.

### Background

Densification of wireless network deployments is ongoing in order to improve the spectral efficiency. Dense wireless networks or ultra-dense wireless networks are deployed with indoor densities of a few tens of access points per hundred square metre (for instance 25 access points / 100 m2) and outdoor densities of more than thousand access points providing services like Internet connectivity to users within a certain, limited geographical area. As a consequence thereof, a single user device requesting network access typically senses 10 to 20 neighbouring access points where it can associate with in order to get network connectivity.

At present, a user device selects a radio node for association amongst the sensed neighbouring radio nodes based on the strongest signal criterion. In other words, the neighbouring radio node whose beacons are detected with the highest signal strength, is selected for association.

More sophisticated solutions for controlling association of a user device with radio nodes described in literature consider other parameters such as the spectral efficiency, the load, the backhaul link capacity, the backhaul topology, the uplink and/or downlink traffic demand, and rely on a static analytical model that receives these parameters as inputs to select a radio node for association of a wireless device.

The existing strongest signal selection and rather theoretic approach based on analytical models do not account for the high dynamics in the environment and large number of devices. Future wireless network deployments are expected to support high data rates while reducing interference in an efficient way considering the dynamics of the wireless neighbourhood and the trade-off between user experience and network performance.

### Summary

The existing strongest signal selection and rather theoretic approach based on analytical models do not account for the high dynamics in the environment and large number of devices. Future wireless network deployments are expected to support high data rates while reducing interference in an efficient way considering the dynamics of the wireless neighbourhood and the trade-off between user experience and network performance.

Amongst others, it is therefore an object of embodiments of the invention to disclose a controller for association of a user device with a radio node that resolves or mitigates one or several of the above identified shortcomings of existing solutions. More particularly, it is an objective to disclose embodiments of a controller that automates the selection of a radio node for association without static analytical modelling, taking into consideration the dynamics of the wireless neighbourhood, e.g. the varying number of devices, interference and load in order to improve user experience and load balancing in the entire wireless network.

This object is achieved, according to a first example aspect of the present disclosure, by a controller as defined in claim 1, for association of a user device with a radio node in a wireless network wherein the user device can associate with plural neighbour radio nodes to access the wireless network, the controller comprising at least one processor and at least one memory including computer program code, the at least one memory and computer program code configured to, with the at least one processor, cause the controller to perform:
- learning one or more performance metric of the neighbour radio nodes or fronthaul links between the user device and the neighbour radio nodes;
- determining one or more cumulative performance metric for respective multi-hop paths from the neighbour radio nodes to a destination in the wireless network;
- selecting a best path amongst the paths according to a performance criterion combining the one or more performance metric and the one or more cumulative performance metric; and
- selecting the neighbour radio node of the best path for association of the user device.

Thus, embodiments of the controller learn performance metrics of the first tier radio nodes being the neighbour radio nodes that are sensed by a user device and therefore candidate radio nodes for association. These performance metrics represent one or more parameters indicative for the current performance of the candidate neighbour radio node and the fronthaul link between the user device and the candidate neighbour radio node. In addition thereto, embodiments of the controller determine cumulative performance metrics of the possible multi-hop paths in the wireless network between a candidate neighbour radio node and a destination, the destination being an end node in the wireless network with wired connectivity to a wired network. A cumulative performance metric represents the accumulation of a parameter value across all hops of the multi-hop path between the candidate neighbour radio node and the destination, and is therefore indicative for the current performance of the backhaul connectivity between a candidate neighbour radio node and the destination for a specific path. The learning of performance metrics and determining of cumulative performance metrics is done permanently, preferably in a distributed manner, by controlling logic in the radio nodes themselves such that actual values of these metrics are readily available each time a user device requests access to the wireless network. Embodiments of the controller then apply a performance criterion that combines both performance parameters indicative for the performance of the fronthaul link and candidate neighbour radio node and cumulative performance parameters indicative for the performance of the backhaul path between candidate neighbour radio node and destination. The neighbour radio node belonging to the best path according to the applied performance criterion is selected for association by the user device.

As opposed to existing solutions that lack dynamics and consider only the radio access link between the user device and the neighbour radio nodes, embodiments of the presented controller learn the dynamics of the wireless environment and balance both fronthaul and backhaul links in selecting the radio node for association by a user device.

It is noticed that embodiments of the controller can be implemented centrally in the wireless network, or distributed as network controlling logic residing in the different radio nodes of the wireless network. Both the central implementation and the distributed implementation enable the wireless network to control the association of user devices.

It is further noticed that wireless network in the context of the present disclosure must be interpreted broadly to cover any radio-based network like for instance a WiFi network (in which case the neighbour radio nodes represent WiFi access points), cellular radio networks (in which case the neighbour radio nodes represent base stations), point-to-point wireless networks like Bluetooth networks, etc.

Embodiments of the controller for association of a user device with a radio node defined by claim 2, comprise an artificial neural network for learning the one or more performance metric.

Indeed, the learning of performance metrics of the neighbour radio nodes and/or the fronthaul links between the user device and these neighbour radio nodes may be implemented by an artificial neural network.

Embodiments of the controller for association of a user device with a radio node defined by claim 3, comprise a support vector machine for learning the one or more performance metric.

Thus, in alternate embodiments, the learning of performance metrics of the neighbour radio nodes and/or the fronthaul links between the user device and these neighbour radio nodes may be implemented by a support vector machine. It is noticed that in further alternate embodiments, even simpler learning technology may be implemented, like for instance search algorithms for graphs. The skilled person will appreciate that the learning of performance metrics can be implemented through any inductive learning technology.

In embodiments of the controller for association of a user device with a radio node defined by claim 4, the one or more performance metric of a neighbour radio node or fronthaul link between the user device and the neighbour radio node comprise one or more of:
- capacity of the fronthaul link between the user device and the neighbour radio node;
- amount of user devices connected to the neighbour radio node; and
- energy efficiency of the neighbour radio node.

Indeed, a possible performance metric of the fronthaul link between the user device and a neighbour radio node is the capacity of this link, expressed in Mbps, with possible differentiation between the upstream capacity (capacity in the direction from the user device to the neighbour radio node) and downstream capacity (capacity in the direction from the neighbour radio node to the user device). A possible performance metric for the neighbour radio node is the number of user devices currently connected to or associated with that neighbour radio node. A different possible performance metric of a neighbour radio node is its actual power consumption. The skilled person shall appreciate that the above list of example performance metrics is not exhaustive.

In embodiments of the controller for association of a user device with a radio node defined by claim 5, the one or more cumulative performance metric for a path from a neighbour radio station to the destination comprise one or more of:
- cumulative throughput on backhaul links between radio nodes along the path;
- cumulative transmission errors on backhaul links between radio nodes along the path; and
- cumulative packet retransmissions on backhaul links between radio nodes along the path.

Thus, one possible cumulative performance metric for a multi-hop path from a first tier radio node to a destination radio node across one or plural relay radio nodes is the sum of the throughput of all hops along the path. Control logic available in each radio node thus collects and memorizes the actual throughput on links towards next tier radio nodes in the wireless network. For each path of the different possible paths from a first tier radio node, i.e. a neighbour radio node, to the destination radio node, the throughputs of the links that jointly constitute this path are added in order to provide a cumulative performance metric for the path. An alternative cumulative metric for a multi-hop path from a first tier radio node to a destination radio node across one or plural relay radio nodes could be the sum of transmission errors recently counted on all hops along the path. Control logic available in each radio node may collect and memorize the amount of transmission errors that took place on links towards next tier radio nodes in the wireless network during a predefined time interval. For each path of different possible paths from a first tier radio node, i.e. a neighbour radio node, to the destination radio node, the amount of transmission errors on links that jointly constitute this path are added in order to provide a cumulative performance metric for the path. Yet another alternative cumulative performance metric for a multi-hop path from a first tier radio node to a destination radio node across one or plural relay radio nodes could be the sum of packet retransmissions counted on all hops along the path. Control logic available in each radio node may collect and memorize the amount of packet retransmissions that took place on links towards the next tier radio nodes in the wireless network during a predetermined time interval. For each path of different possible paths from a first tier radio node, i.e. a neighbour radio node, to the destination radio node, the amount of packet retransmissions on links that jointly constitute this path are added in order to provide a cumulative performance metric for the path.

Based on one or plural cumulative performance metrics and one or plural performance metrics, embodiments of the controller select the best path. A possible criterion for instance maximizes a weighted sum of the capacity of the fronthaul link and the cumulative throughput on backhaul links. A different criterion for instance minimizes a weighted sum of the amount of users connected to a neighbour radio node and the cumulative packet retransmissions on the backhaul links. The skilled person shall appreciate that more advanced selection criteria can be contemplated by combining multiple performance metrics and multiple cumulative performance metrics into a single function to be maximized or minimized to select the best path. Knowledge of the best path enables to select the neighbour radio node for association of a user device. More particularly, the first tier radio node of the selected best path will become the selected neighbour radio node for association of the user device.

The above-defined object is further achieved, according to a second example aspect of the present disclosure, by a computer-implemented method as defined by claim 6, for association of a user device with a radio node in a wireless network wherein the user device can associate with plural neighbour radio nodes to access the wireless network, the method comprising:
- learning one or more performance metric of the neighbour radio nodes or fronthaul links between the user device and the neighbour radio nodes;
- determining one or more cumulative performance metric for respective multi-hop paths from the neighbour radio nodes to a destination in the wireless network;
- selecting a best path amongst the paths according to a performance criterion combining the one or more performance metric and the one or more cumulative performance metric; and
- selecting the neighbour radio node of the best path for association of the user device.

The above-defined object is further achieved, according to a third example aspect of the present disclosure, by a computer program product as defined by claim 5, for controlling association of a user device with a radio node in a wireless network wherein the user device can associate with plural neighbour radio nodes to access the wireless network, the computer program product comprising computer-executable instructions for causing a device to perform at least the following steps when the program is run:
- learning one or more performance metric of the neighbour radio nodes or fronthaul links between the user device and the neighbour radio nodes;
- determining one or more cumulative performance metric for respective multi-hop paths from the neighbour radio nodes to a destination in the wireless network;
- selecting a best path amongst the paths according to a performance criterion combining the one or more performance metric and the one or more cumulative performance metric; and
- selecting the neighbour radio node of the best path for association of the user device.

The above-defined object is further achieved, according to a fourth example aspect of the present disclosure, by a computer readable storage medium as defined by claim 8, comprising computer-executable instructions for controlling association of a user device with a radio node in a wireless network wherein the user device can associate with plural neighbour radio nodes to access the wireless network, the computer executable instructions allowing performing the following steps when the program is run on a computer:
- learning one or more performance metric of the neighbour radio nodes or fronthaul links between the user device and the neighbour radio nodes;
- determining one or more cumulative performance metric for respective multi-hop paths from the neighbour radio nodes to a destination in the wireless network;
- selecting a best path amongst the paths according to a performance criterion combining the one or more performance metric and the one or more cumulative performance metric; and
- selecting the neighbour radio node of the best path for association of the user device.

### Brief Description of the Drawings

Some example embodiments will now be described with reference to the accompanying drawings.
Fig. 1 shows an example embodiment of the controller CL for association of a user device 150 with a radio node RN in a wireless network 100;
Fig. 2 illustrates an example embodiment of a computer-implemented method for association of a user device with a radio node in a wireless network; and
Fig. 3 shows an example embodiment of a suitable computing system 300 for performing one or several steps in embodiments of the computer-implemented method for association of a user device with a radio node in a wireless network.

### Detailed Description of Embodiment(s)

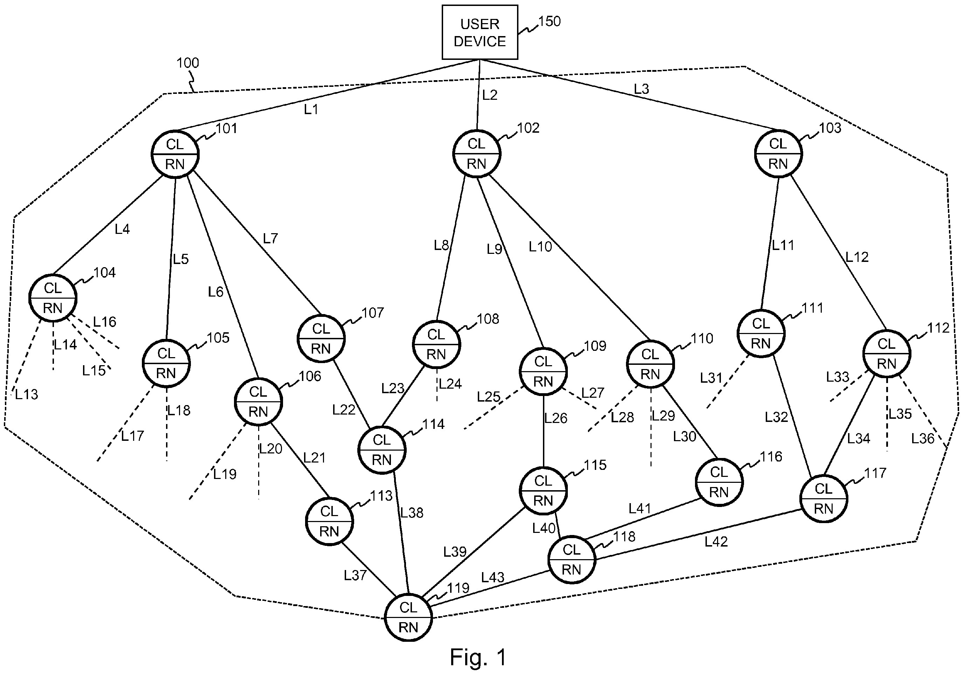

Fig. 1 shows a user device 150, for example a smartphone, tablet computer, laptop computer, etc., and a wireless network 100 where the user device 150 requests access to. The wireless network 100 is a dense wireless network with tens or even hundreds of radio nodes, for instance access points or base stations and relay nodes. A number of these radio nodes RN are drawn in Fig. 1, labelled 101-119, as well as a number of the wireless links interconnecting these radio nodes: L4-L43. In Fig. 1, it is further assumed that the user device 150, at the time it requests access to the wireless network 100, senses three access points, the so-called neighbour radio nodes 101, 102 and 103. The wireless fronthaul links between the user device 150 and the respective neighbour radio nodes 101, 102, 103 are respectively labelled L1, L2 and L3 in Fig. 1. It is further assumed in Fig. that the user device 150 requests Internet access and thereto has to exchange data packets with a destination node 119 in the wireless network 100, a gateway in the wireless network 100 that provides further wired connectivity to the Internet. Upon receipt of the access request from the user device 150, distributed control logic CL running in each radio node 101-119 of the wireless network 100 shall steer the user device 150 to associate with the neighbour radio node, either 101, 102 or 103, that provides the best wireless path to the destination node 119.

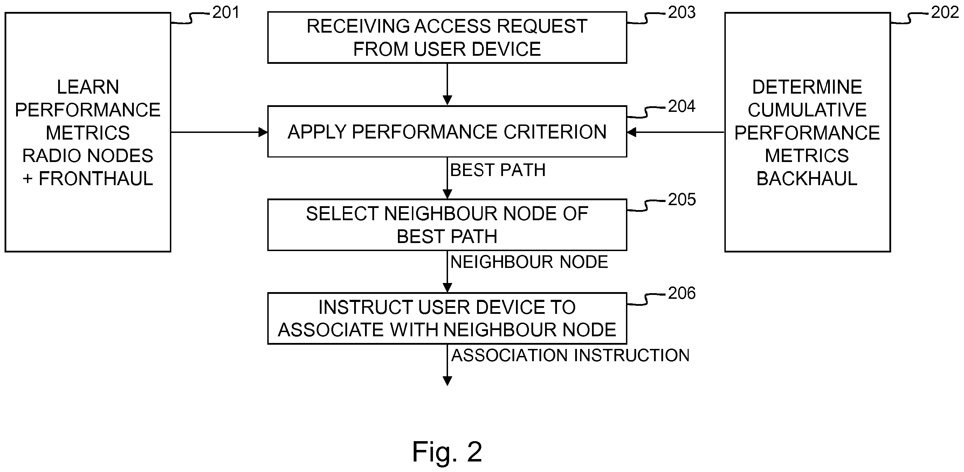

The operation of the control logic CL running in each radio node 101-119 is illustrated by Fig. 2. The distributed control logic installed on first tier radio nodes, i.e. access nodes or base stations like 101, 102 and 103 where a user device can associate with in order to access the wireless network, permanently learns one or plural performance metrics of the radio node whereon it is installed and/or one or more performance metrics of fronthaul links between the user device 150 requesting access and the radio node whereon it is installed. This is indicated by step 201 in Fig. 2. In the example of radio node 101 in Fig. 1, it may for instance be assumed that the control logic CL installed thereon permanently learns the capacity of the link L1 between radio node 101 and the user device 150 requesting access, the amount of connected user devices to radio node 101, and the instant power consumption by radio node 101. Similarly, same control logic CL installed on radio node 102 permanently learns the capacity of the link L2 between radio node 102 and the user device 150 requesting access, the amount of connected user devices to radio node 102, and the instant power consumption by radio node 102. Further similarly, same control logic CL installed on radio node 103 permanently learns the capacity of the link L3 between radio node 103 and the user device 150 requesting access, the amount of connected user devices to radio node 103, and the instant power consumption by radio node 103. The learning 201 of the performance parameters of the neighbour radio nodes and the fronthaul links between user devices and these neighbour radio nodes can be implemented through existing learning technology like for instance an artificial neural network, a support vector machine, or search algorithms for graphs.

In addition thereto, the control logic CL installed on all radio nodes 101-119 determines cumulative performance metrics for backhaul paths towards the destination radio node 119. The control logic CL installed on radio node 101 for instance maintains the throughput and/or the transmission errors during a certain time interval, and/or the amount of packet retransmissions during a certain time interval for each of its next hop backhaul links: L4 towards radio node 104, L5 towards radio node 105, L6 towards radio node 106 and L7 towards radio node 107. In a similar way, the control logic CL installed on radio node 102 for instance maintains the throughput, and/or the amount of transmission errors counted during a certain time interval, and/or the amount of packet retransmissions counted during a certain time interval for each of its next hop backhaul links: L8 towards radio node 108, L9 towards radio node 109, and L10 towards radio node 110. Further similarly, the control logic CL installed on radio node 103 for instance maintains the throughput, and/or the amount of transmission errors counted during a certain time interval, and/or the amount of packet retransmissions counted during a certain time interval for each of its next hop backhaul links: L11 towards radio node 111, and L12 towards radio node 112. Also the other radio nodes in the wireless network 100, i.e. the relay nodes 104-119 that are not necessarily access points or base stations in the wireless network 100, permanently collect and memorize the throughput, and/or the amount of transmission errors counted during a certain time interval, and/or the amount of packet retransmissions counted during a certain time interval for each of their next hop backhaul links. Thus, relay radio node 104 maintains these parameters for its next hop backhaul links L13, L14, L15 and L16, relay radio node 105 maintains these parameters for its next hop backhaul links L17 and L18, relay radio node 106 maintains these parameters for its next hop backhaul links L19, L20 and L21, relay radio node 107 maintains these parameters for its next hop backhaul link L22, relay radio node 108 maintains these parameters for its next hop backhaul links L23 and L24, relay radio node 109 maintains these parameters for its next hop backhaul links L25, L26 and L27, relay radio node 110 maintains these parameters for its next hop backhaul links L28, L29 and L30, relay radio node 111 maintains these parameters for its next hop backhaul links L31 and L32, relay radio node 112 maintains these parameters for its next hop backhaul links L33, L34, L35 and L36, relay radio node 113 maintains these parameters for its next hop backhaul link L37, relay radio node 114 maintains these parameters for its next hop backhaul link L38, relay radio node 115 maintains these parameters for its next hop backhaul links L39 and L40, relay radio node 116 maintains these parameters for its next hop backhaul link L41, relay radio node 117 maintains these parameters for its next hop backhaul link L42, and relay radio node 118 maintains these parameters for its next hop backhaul link L43. The backhaul link performance parameters are further communicated between the distributed control logic modules CL running on the different radio nodes 101-119 such that the control logic module CL in each radio node can determine one or more cumulative performance metric for backhaul paths towards the destination node 119. In the example of Fig. 1, the distributed control logic CL shall determine a cumulative performance metric for a first possible path from radio node 101 to destination node 119 via link L6, radio node 106, link L21, radio node 113 and link L37. Similarly, a cumulative performance metric shall be determined for a second possible path from radio node 101 to destination node 119 via link L7, radio node 107, link L22, radio node 114 and link L38, for a third possible path from radio node 102 to destination node 119 via link L8, radio node 108, link L23, radio node 114 and link L38, for a fourth possible path from radio node 102 to destination node 119 via link L9, radio node 109, link L26, radio node 115 and link L39, for a fifth possible path from radio node 102 to destination node 119 via link L9, radio node 109, link L26, radio node 115, link L40, radio node 118 and link L43, for a sixth possible path from radio node 102 to destination node 119 via link L10, radio node 110, link L30, radio node 116, link L41, radio node 118 and link L43, for a seventh possible path from radio node 103 to destination node 119 via link L11, radio node 111, link L32, radio node 117, link L22, radio node 118 and link L43, and for an eight possible path from radio node 103 to destination node 119 via link L12, radio node 112, link L34, radio node 117, link L22, radio node 118 and link L43. The cumulative performance metric for a path corresponds to the sum of a single parameter across the backhaul links that constitute that path, like for instance the sum of the throughput on links L6, L21 and L37 for the above-mentioned first possible path.

Upon receipt of an access request from user device 150 in step 203, the distributed control logic LC shall use the available information, i.e. the learned performance metrics for the neighbouring nodes 101, 102, 103 and respective fronthaul links L1, L2, L3 towards these neighbour radio nodes 101, 102, 103, as well as the determined cumulative performance metrics for the different possible paths across backhaul links from the neighbouring nodes to the destination nodes, in a performance criterion to select the best path. The performance criterion shall consider at least one performance parameter of the fronthaul links / neighbour radio nodes and at least one cumulative performance parameter of the backhaul path such that the best path is selected taking into account both the fronthaul and first tier performance as well as the backhaul performance. The performance criterion is applied in step 204 and results in selection of the best path.

Once the best path is known, the control logic LC selects the neighbour node of user device 150 that forms part of this best path. If it is assumed for instance in the above described example that the fourth path via radio node 102, link L9, radio node 109, link L26, radio node 115 and link L39 constitutes the best path according to the performance criterion, then radio node 102 will be selected in step 205 as the neighbour radio node where the user device 150 has to associate with.

In response to the request of the user device 150 to access the wireless network 150, the distributed control logic CL instructs the user device 150 to associate with neighbour radio node 102 in step 206. The permanent learning of fronthaul performance metrics and permanent determination of cumulative backhaul performance metrics allows the network to consider the dynamics of the wireless neighbourhood and to load-balance backhaul and fronthaul links each time user devices request access to the wireless network. Furthermore, the method can be repeated at regular time intervals for user devices that are already associated with a neighbour radio node or, more likely, whenever user service is degraded for instance as a result of varying interference due to the dynamics of the wireless environment. As a consequence, a user device that is associated with a first neighbour wireless node may for instance after one hour be pushed to associate with a second neighbour wireless node in order to improve user experience and/or load balance on fronthaul and/or backhaul links given the changed wireless environment.

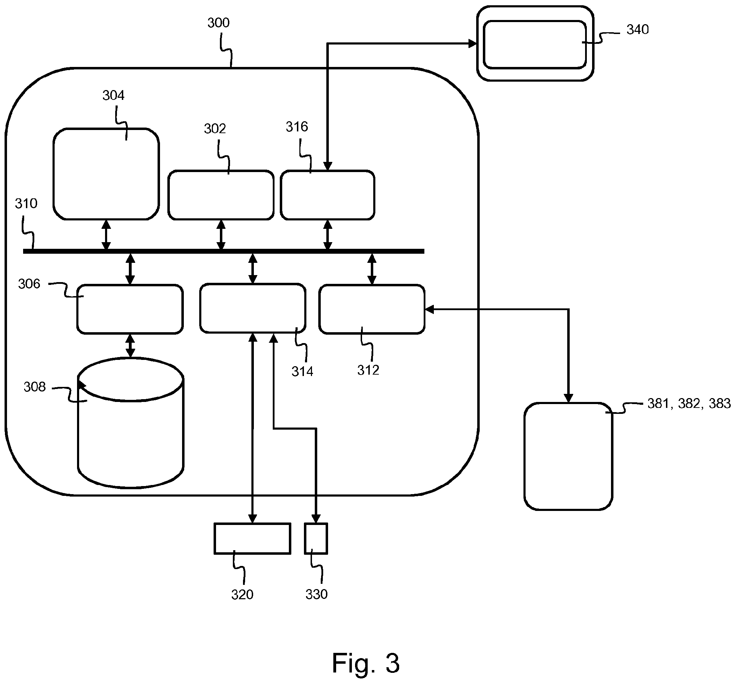

Fig. 3 shows a suitable computing system 300 enabling to implement embodiments of the method for controlling association of a user device with a neighbour radio node of a wireless network. Computing system 300 may in general be formed as a suitable general-purpose computer and comprise a bus 310, a processor 302, a local memory 304, one or more optional input interfaces 314, one or more optional output interfaces 316, a communication interface 312, a storage element interface 306, and one or more storage elements 308. Bus 310 may comprise one or more conductors that permit communication among the components of the computing system 300. Processor 302 may include any type of conventional processor or microprocessor that interprets and executes programming instructions. Local memory 304 may include a random-access memory (RAM) or another type of dynamic storage device that stores information and instructions for execution by processor 302 and/or a read only memory (ROM) or another type of static storage device that stores static information and instructions for use by processor 302. Input interface 314 may comprise one or more conventional mechanisms that permit an operator or user to input information to the computing device 300, such as a keyboard 320, a mouse 330, a pen, voice recognition and/or biometric mechanisms, a camera, etc. Output interface 316 may comprise one or more conventional mechanisms that output information to the operator or user, such as a display 340, etc. Communication interface 312 may comprise any transceiver-like mechanism such as for example one or more Ethernet interfaces that enables computing system 300 to communicate with other devices and/or systems, for example with other computing devices 381, 382, 383. The communication interface 312 of computing system 300 may be connected to such another computing system by means of a local area network (LAN) or a wide area network (WAN) such as for example the internet. Storage element interface 306 may comprise a storage interface such as for example a Serial Advanced Technology Attachment (SATA) interface or a Small Computer System Interface (SCSI) for connecting bus 310 to one or more storage elements 308, such as one or more local disks, for example SATA disk drives, and control the reading and writing of data to and/or from these storage elements 308. Although the storage element(s) 308 above is/are described as a local disk, in general any other suitable computer-readable media such as a removable magnetic disk, optical storage media such as a CD or DVD, - ROM disk, solid state drives, flash memory cards, ... could be used. Computing system 300 could thus correspond to the controller circuitry CL in the embodiments illustrated by Fig. 1.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A controller (CL) for association of a user device (150) with a radio node (102) in a wireless network (100) wherein said user device (150) can associate with plural neighbour radio nodes (101, 102, 103) to access said wireless network (100), said controller (CL) comprising at least one processor and at least one memory including computer program code, the at least one memory and computer program code configured to, with the at least one processor, cause the controller (CL) to perform:
- learning (201) one or more performance metric of said neighbour radio nodes (101, 102, 103) or fronthaul links (L1, L2, L3) between said user device (150) and said neighbour radio nodes (101, 102, 103);
- determining (202) one or more cumulative performance metric for respective multi-hop paths from said neighbour radio nodes (101, 102, 103) to a destination (119) in said wireless network (100);
- selecting (204) a best path (102-L9-109-L26-115-L39) amongst said paths according to a performance criterion combining said one or more performance metric and said one or more cumulative performance metric; and
- selecting (205) the neighbour radio node (102) of said best path for association of said user device (150).

2. A controller (CL) for association of a user device (150) with a radio node (102) according to claim 1, comprising an artificial neural network for learning said one or more performance metric.

3. A controller (CL) for association of a user device (150) with a radio node (102) according to claim 1, comprising a support vector machine for learning said one or more performance metric.

4. A controller (CL) for association of a user device (150) with a radio node (102) according to one of the preceding claims, wherein said one or more performance metric of a neighbour radio node (101, 102, 103) or fronthaul link (L1, L2, L3) between said user device (150) and said neighbour radio node (101, 102, 103) comprise one or more of:
- capacity of said fronthaul link (L1, L2, L3) between said user device (150) and said neighbour radio node (101, 102, 103);
- amount of user devices connected to said neighbour radio node (101, 102, 103); and
- energy efficiency of said neighbour radio node (101, 102, 103).

5. A controller (CL) for association of a user device (150) with a radio node (102) according to one of the preceding claims, wherein said one or more cumulative performance metric for a path from a neighbour radio station (101, 102, 103) to said destination (119) comprise one or more of:
- cumulative throughput on backhaul links between radio nodes along said path;
- cumulative transmission errors on backhaul links between radio nodes along said path; and
- cumulative packet retransmissions on backhaul links between radio nodes along said path.

6. A computer-implemented method for association of a user device (150)with a radio node (102) in a wireless network (100) wherein said user device (150) can associate with plural neighbour radio nodes (101, 102, 103) to access said wireless network (100), said method comprising:
- learning (201) one or more performance metric of said neighbour radio nodes (101, 102, 103) or fronthaul links (L1, L2, L3) between said user device (150) and said neighbour radio nodes (101, 102, 103);
- determining (202) one or more cumulative performance metric for respective multi-hop paths from said neighbour radio nodes (101, 102, 103) to a destination (119) in said wireless network (100);
- selecting (204) a best path (102-L9-109-L26-115-L39) amongst said paths according to a performance criterion combining said one or more performance metric and said one or more cumulative performance metric; and
- selecting (205) the neighbour radio node (102) of said best path (102-L9-109-L26-115-L39) for association of said user device (150).

7. A computer program product for controlling association of a user device (150) with a radio node (102) in a wireless network (100) wherein said user device (150) can associate with plural neighbour radio nodes (101, 102, 103) to access said wireless network (100), said computer program product comprising computer-executable instructions for causing a device to perform at least the following steps when the program is run:
- learning (201) one or more performance metric of said neighbour radio nodes (101, 102, 103) or fronthaul links (L1, L2, L3) between said user device (150) and said neighbour radio nodes (101, 102, 103);
- determining (202) one or more cumulative performance metric for respective multi-hop paths from said neighbour radio nodes (101, 102, 103) to a destination (119) in said wireless network (100);
- selecting (204) a best path (102-L9-109-L26-115-L39) amongst said paths according to a performance criterion combining said one or more performance metric and said one or more cumulative performance metric; and
- selecting (205) the neighbour radio node (102) of said best path (102-L9-109-L26-115-L39) for association of said user device (150).

8. A computer readable storage medium comprising computer-executable instructions for controlling association of a user device (150) with a radio node (102) in a wireless network (100) wherein said user device (150) can associate with plural neighbour radio nodes (101, 102, 103) to access said wireless network (100), said computer executable instructions allowing performing the following steps when the program is run on a computer:
- learning (201) one or more performance metric of said neighbour radio nodes (101, 102, 103) or fronthaul links (L1, L2, L3) between said user device (150) and said neighbour radio nodes (101, 102, 103);
- determining (202) one or more cumulative performance metric for respective multi-hop paths from said neighbour radio nodes (101, 102, 103) to a destination (119) in said wireless network (100);
- selecting (204) a best path (102-L9-109-L26-115-L39) amongst said paths according to a performance criterion combining said one or more performance metric and said one or more cumulative performance metric; and
- selecting (205) the neighbour radio node (102) of said best path (102-L9-109-L26-115-L39) for association of said user device (150).
